# DEMANDE DE BREVET EUROPEEN

(11) **EP 0 580 468 A1**
(43) Date de publication de la demande: **26.01.1994**
(21) Numéro de dépôt: 93401644.5
(22) Date de dépôt: 25.06.1993
(51) Int. Cl.: F16B 7/20, F16B 21/04, H01R 13/625

(54) **Ensemble de connexion à verrouillage du type Baionnette**

(30) Priorité: 24.07.1992 FR 9209158
(71) Demandeur: FRAMATOME CONNECTORS INTERNATIONAL, 92084 Paris La Défense (FR)
(72) Inventeur: Boiret, Gérard, F-72530 Ivre L'Eveque (FR); Quillet, Thierry, F-72190 Saint Pavace Le mans (FR)
(74) Mandataire: Keib, Gérard

(57) **Abrégé**

L'invention concerne un ensemble de connexion comprenant une embase (1) présentant des ergots de verrouillage (16) et une fiche comprenant un corps de fiche (2) et une bague de verrouillage (3). La bague (3) présente des rampes (40) présentant une largeur donnée (1) permettant un déplacement d'un ergot (16) et se terminant par une butée (43). Un élément élastique (50) disposé à une extrémité de la rampe (40) présente une zone (41, 51) de rétrécissement de la rampe (40) et une deuxième zone (42, 52) de logement de l'ergot (16), et la deuxième zone (41, 52) est plus large que la première zone (41, 51) de telle sorte que la poutre s'efface élastiquement au passage de l'ergot (16) dans la première zone de rétrécissement et revient en position lorsque l'ergot (16) se trouve à proximité de la butée (43).

L'élément élastique de cet ensemble de connexion, est une poutre (50) encastrée à un de ses bouts (55) et dont l'autre bout (54) présente une échancrure (52).

## Description

La présente invention a pour objet un ensemble de connexion présentant un système de verrouillage de type baionnette, c'est-à-dire comprenant une embase présentant au moins un ergot de verrouillage et une fiche comprenant un corps de fiche et une bague de verrouillage.

Les ensembles de connexion de l'art antérieur du type précité sont considérés comme verrouillés lorsque l'ergot de verrouillage atteint une butée. Il en résulte qu'il n'existe pas, à proprement parler, une fonction spécifique de verrouillage de l'ensemble.

La présente invention a pour objet un ensemble de connexion du type précité dans lequel il existe un verrouillage positif par encliquetage au cours duquel il présente une sensation tactile d'effort en verrouillage et pour lequel un déverrouillage nécessite de vaincre une force de rétention.

L'ensemble de connexion selon l'invention est dans ce but caractérisé en ce que la bague présente au moins une rampe présentant une largeur donnée permettant un déplacement dudit ergot le long de celle-ci et un élément élastique disposé à une extrémité de la rampe et définissant une première zone de rétrécissement de la rampe et une deuxième zone de logement de l'ergot, ladite extrémité de la rampe se terminant par une butée, la deuxième zone étant plus large que l'ergot et que la première zone, de telle sorte que la poutre s'efface élastiquement au passage de l'ergot et revient en position sans subir de compression de la part de l'ergot lorsque l'ergot se trouve dans ladite deuxième zone de logement de l'ergot à proximité de ladite butée.

L'embase peut présenter par exemple trois ergots répartis à 120° sur son contour extérieur.

L'élément élastique est avantageusement constitué par une poutre encastrée à un de ses bouts et dont l'autre bout présente une échancrure pour former ladite deuxième zone. La poutre peut être située dans le prolongement de la rampe, celle-ci pouvant être hélicoïdale.

La bague présente avantageusement une collerette montée libre en rotation dans une rainure du corps de fiche.

Selon un mode de réalisation préféré, l'ensemble de connexion comporte un joint élastique disposé entre le corps de fiche et l'embase et disposé de manière telle que, lorsqu'un dit ergot se trouve à proximité de ladite butée, le joint soit comprimé et exerce une force tendant à écarter le corps de fiche de l'embase, force qui est retransmise par l'intermédiaire de la bague de verrouillage de telle sorte que l'ergot soit appliqué sur une portion de la rampe adjacente à ladite butée, et qui est disposée dans ladite deuxième zone, de manière d'une part, à rattraper le jeu, et d'autre part, à libérer l'élément élastique de contraintes permanentes substantielles.

L'invention concerne également une bague de verrouillage destinée à un connecteur à verrouillage de type baïonnette tel que mentionné ci-dessus, caractérisée en ce qu'elle comporte une rampe de guidage d'ergot, de largeur donnée, et un élément élastique disposé à une extrémité de la rampe et définissant une première zone de rétrécissement de la rampe et une deuxième zone de logement d'ergot, ladite extrémité de la rampe se terminant par une butée, la deuxième zone étant plus large que l'ergot et que la première zone de telle sorte que l'élément élastique s'efface élastiquement au passage de l'ergot dans la zone de rétrécissement et revient en position initiale sans subir de compression de la part de l'ergot lorsque l'ergot se trouve dans la deuxième zone à proximité de ladite butée. L'élément élastique peut être constitué par une poutre encastrée à un de ses bout et dont l'autre bout présente une échancrure pour former ladite deuxième zone. La poutre peut être située avantageusement dans le prolongement de la rampe.

D'autres caractéristiques et avantages de l'invention seront mieux compris à la lecture de la description qui va suivre, donnée à titre d'exemple non limitatif, en liaison avec les dessins qui représentent :

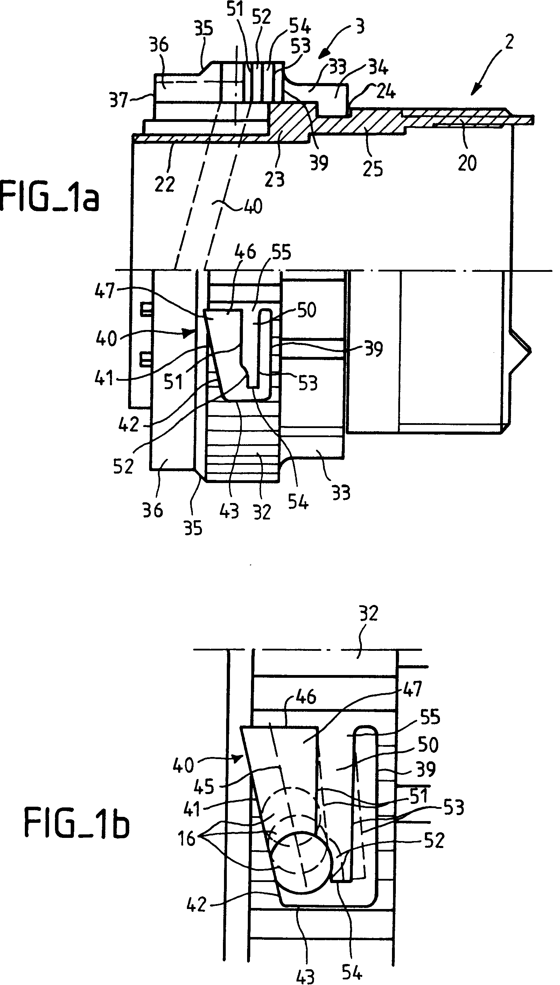

- les figures 1a et 1b, une coupe longitudinale partielle d'un ensemble comportant un corps de fiche et une bague selon l'invention, la figure lb étant un détail de la figure la, avec en pointillés la position d'une poutre en position écartée par un ergot correspondant.

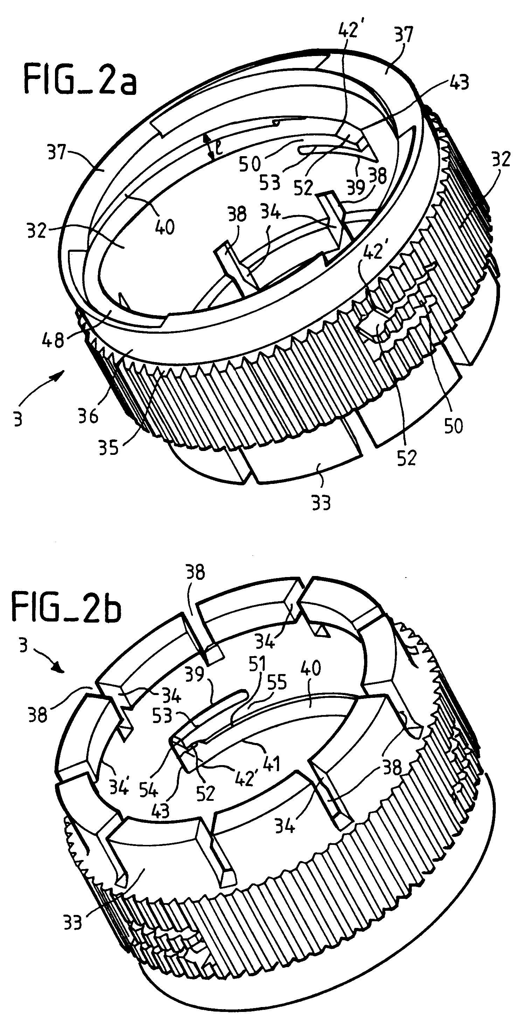

- les figures 2a et 2b, deux vues en perspective, respectivement depuis la face avant et depuis la face arrière d'une bague selon un mode de réalisation préféré de l'invention.

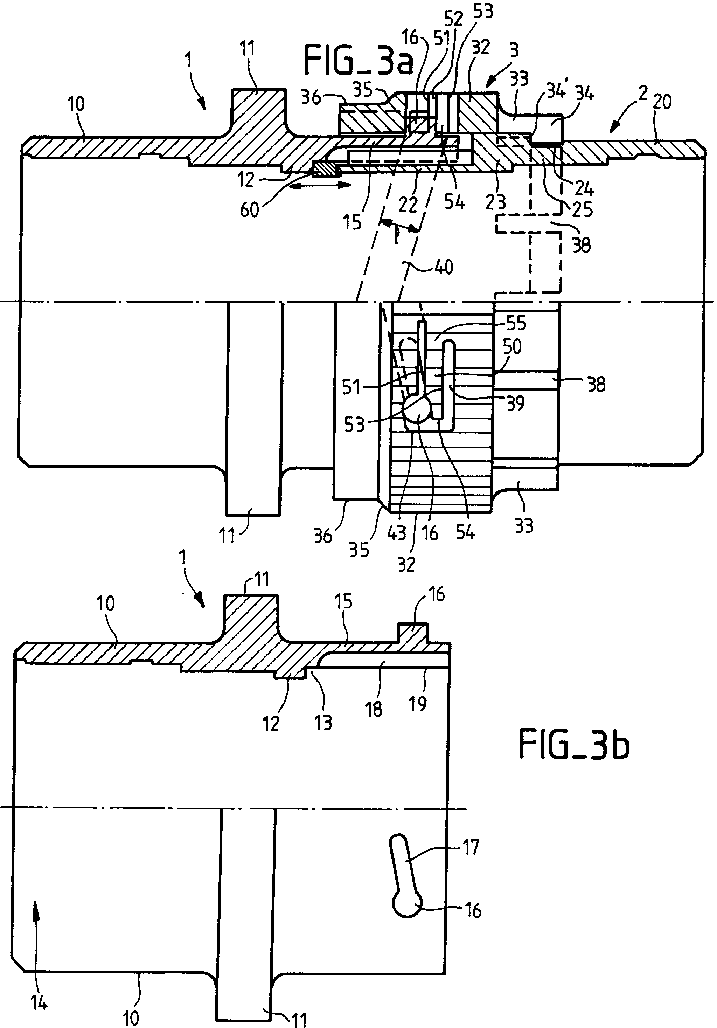

- La figure 3a, un ensemble de connexion assemblé selon l'invention.
- la figure 3b, une embase pour un ensemble de connexion selon l'invention.

Une fiche selon l'invention comporte d'une part un corps de fiche représenté par le repère général 2 qui présente une partie avant cylindrique 22, une partie centrale 23 présentant à son pourtour extérieur une rainure périphérique 24 et une partie arrière 20. La bague 3 comporte une partie avant 36 qui se raccorde par un profil tronconique 35 à une partie centrale 32 dont le contour extérieur est pourvu de corrugations longitudinales procurant une rugosité favorable à la manipulation par le doigt d'un utilisateur pour verrouiller l'ensemble de connexion, et une partie arrière 33 qui présente, sur sa face intérieure, une collerette 34 introduite dans la rainure périphérique 24 de manière à permettre à la bague un mouvement libre en rotation autour d'un axe longitudinal du corps de fiche 2. La partie arrière 33 présente également des ouvertures longitudinales 38, ici au nombre de 9, qui séparent la collerette 34 en autant de secteurs qui peuvent être écartés élastiquement pour permettre leur montage dans la rainure 24. La partie interne de la bague 3 comporte des rainures hélicoïdales 40 qui s'amorcent en 48 à l'extrémité avant 37 de la partie avant 36 et qui se prolongent jusqu'à une butée 43.

L'embase représentée par le repère général 1 comporte une partie arrière 10 dans laquelle est disposé un corps isolant et des éléments de connexions représentés par le repère général 14, une collerette 11 pour permettre la fixation de l'embase sur un support, une collerette intérieure 12 présentant un logement 13 formant une butée pour un joint 60 et des rainures de détrompage 18 réparties autour de sa partie avant 15, laquelle présente sur son contour extérieur des ergots 16 qui peuvent être métalliques et rapportés comme il est connu ou bien qui peuvent venir de moulage et être par exemple renforcés par un prolongement 17 de forme générale parallélépipédique. Un ergot 16 a un diamètre sensiblement inférieur à la largeur 1 de la rampe correspondante 40 de manière à permettre son déplacement le long de celle-ci. Sur le dessin on a représenté trois ergots équidistants répartis à 120° autour de la partie avant 15 de l'embase 1.

Au voisinage de la butée 43, la rampe 40 débouche en 46 dans un logement 47 de la partie centrale 32. Ce logement comporte un élément élastique constitué par une poutre 50 encastrée à une extrémité 55 et se terminant par une extrémité libre 54 espacée de la butée 43. La poutre 50 présente un premier bord situé du côté de la fente 40 et convergeant vers un bord opposé 41 de celle-ci de manière à former un rétrécissement dont la largeur devient progressivement inférieure au diamètre de l'ergot 16. Au voisinage de son extrémité libre 54, la poutre 50 présente un décrochement 52 constituant un logement pour l'ergot et dont la dimension est de préférence telle que, lorsque la poutre 50 est en position de repos, la distance entre le décrochement 52 et une partie de la fente 2 de la paroi 41 qui jouxte la butée 43 soit supérieure au diamètre de l'ergot 16.

En position de repos, le bord 53 de la poutre 50 opposé au bord 51 est parallèle à une paroi 39 du logement 47, et espacé de celui-ci d'une distance permettant un débattement élastique de la poutre 50. Pour verrouiller le connecteur, les ergots 16 sont engagés dans les rampes 40 à partir de leur origine 48 et la bague 3 est mise en rotation pour faire venir les ergots 16 en butée en 43. Lorsque l'ergot 16 arrive au voisinage du logement 47, il écarte progressivement la poutre 50 le long de son bord 51, ce qui permet d'obtenir une sensation tactile de l'augmentation de l'effort de verrouillage, puis il atteint la zone de décrochement 52 dans laquelle la poutre 50 revient en position de repos, d'où une nouvelle sensation tactile par diminution de la force de verrouillage, puis, obtention du verrouillage proprement dit par mise en butée de l'ergot 16 en 43. Ceci s'accompagne éventuellement d'un léger claquement provenant de la percussion du décrochement 52 de la poutre 50 qui, lors de son mouvement de retour, dépasse son point d'équilibre. 11 suffit pour cela de choisir de manière appropriée le jeu entre l'ergot en butée en 43 et le décrochement 52.

Pour déverrouiller l'ensemble de connexion, il faut vaincre une force de rétention pour déplacer de nouveau, de manière élastique, la poutre 50. La forme en arc de cercle du décrochement 52 permet d'obtenir un verrouillage efficace tout en nécessitant une force de déverrouillage qui n'est que peu élevée.

Un joint 60 logé en 13 est comprimé entre la partie avant 22 du corps de fiche 2 et la collerette interne. Le dimensionnement des pièces est tel que cette force de compression qui tend à séparer l'embase 1 et le corps de fiche 2 est transmise par l'intermédiaire de la rainure 24 à la partie avant 34' de la collerette 34, ce qui tend à plaquer en 42 l'ergot 16 qui est déjà en butée en 43. De la sorte, la poutre 50 ne subit pas d'effort statique lorsque l'ensemble de connexion est en position verrouillée. On notera que la bague 3 peut être avantageusement réalisée en matériau composite présentant de bonnes propriétés de résilience.

## Revendications

1. Ensemble de connexion comprenant une embase présentant au moins un ergot de verrouillage et une fiche comprenant un corps de fiche et une bague de verrouillage, caractérisé en ce que la bague (3) présente au moins une rampe (40) présentant une largeur donnée (1) permettant un déplacement dudit ergot (16) le long de celle-ci et un élément élastique (50) disposé à une extrémité de la rampe (40), et définissant une première zone (41, 51) de rétrécissement de la rampe (40) et une deuxième zone (42, 52) de logement de l'ergot (16), ladite extrémité de la rampe se terminant par une butée (43), la deuxième zone (42, 52) étant plus large que l'ergot (16) et que la première zone (41, 51) de telle sorte que l'élément élastique (50) s'efface élastiquement au passage de l'ergot (16) dans la première zone de rétrécissement et revient en position initiale sans subir de compression de la part de l'ergot (16) lorsque l'ergot (16) se trouve dans ladite deuxième zone (42, 52) de logement à proximité de la butée (43).

2. Ensemble de connexion selon la revendication 1, caractérisé en ce que l'embase (1) présente trois ergots (16) répartis à 120° sur son contour extérieur.

3. Ensemble de connexion selon une des revendications 1 ou 2, caractérisé en ce que l'élément élastique est constitué par une poutre (50) encastrée à un de ses bouts (55) et dont l'autre bout (54) présente une échancrure (52) pour former ladite deuxième zone.

4. Ensemble de connexion selon la revendication 3, caractérisé en ce que la poutre (50) est située dans le prolongement de la rampe (40).

5. Ensemble de connexion selon la revendication 4, caractérisé en ce que la rampe (10) est hélicoïdale.

6. Ensemble de connexion selon la revendication 1, caractérisé en ce que la bague (3) présnte une collerette (34) montée libre en rotation dans une rainure (24) du corps de fiche (2).

7. Ensemble de connexion selon une des revendications précédentes, caractérisé en ce qu'il comporte un joint élastique (60) disposé entre le corps de fiche (2) et l'embase (1) et disosé de manière telle que, lorsqu'un dit ergot (16) se trouve à proximité de ladite butée (43), le joint (60) soit comprimé et exerce une force tendant à écarter le corps de fiche (2) de l'embase (1), force qui est retransmise par l'intermédiaire de la bague de verouillage (3) de telle sorte que l'ergot (16) soit appliqué sur une partie (42) de la rampe (40) qui est adjacente à ladite butée (43) et qui est disposée dans ladite deuxième zone (42, 52) de manière d'une part, à rattraper le jeu, et d'autre part, à libérer l'élément élastique (50) de contraintes permanentes substantielles.

8. Bague de verrouillage destinée à un connecteur à verrouillage de type baïonnette et comportant au moins un ergot de verrouillage caractérisée en ce qu'elle présente au moins une rampe (40) présentant une largeur donnée (1) permettant un déplacement dudit ergot (16) le long de celle-ci et un élément élastique (50) disposé à une extrémité de la rampe (40), et définissant une première zone (41, 51) de rétrécissement de la rampe (40) et une deuxième zone (42, 52) de logement de l'ergot (16), ladite extrémité de la rampe se terminant par une butée (43), la deuxième zone (41, 52) étant plus large que l'ergot (16) et que la première zone (41, 51) de telle sorte que l'élément élastique (50) s'efface élastiquement au passage de l'ergot (16) dans la première zone de rétrécissement et revient en position initiale sans subir de compression de la part de l'ergot (16) lorsque l'ergot (16) se trouve dans ladite deuxième zone (42, 52) de logement à proximité de la butée (43).

9. Bague de verrouillage selon la revendication 8, caractérisée en ce que l'élément élastique est constitué par une poutre (50) encastrée à un de ses bouts (55) et dont l'autre (54) présente une échancrure (52) pour former ladite deuxième zone.

10. Bague de verrouillage selon la revendication 9, caractérisée en ce que la poutre (50) est située dans le prolongement de la rampe (40).
